# EUROPEAN PATENT APPLICATION

(11) **EP 1 365 364 A2**
(43) Date of publication of application: **26.11.2003**
(21) Application number: 03011359.1
(22) Date of filing: 19.05.2003
(51) Int. Cl.: G07F 7/10

(54) **Communication terminal, server apparatus, electronic worth charging method, and electronic worth charging program**

(30) Priority: 20.05.2002 JP 2002145031
(71) Applicant: NTT DoCoMo, Inc., Tokyo 100-6150 (JP); Sakamura, Ken, Tokyo 141-0032 (JP); Koshizuka, Noboru, Musashino-shi, Tokyo 180-0013 (JP)
(72) Inventor: Sakamura, Ken, Tokyo 141-0032 (JP); Koshizuka, Noboru, Musashino-shi, Tokyo 180-0013 (JP); Aono, Hiroshi, NTT DoCoMo, Inc., Sanno Park Tower, Tokyo 100-6150 (JP); Ishii, Kazuhiko, NTT DoCoMo, Inc., Sanno Park Tw., Tokyo 100-6150 (JP); Mori, Kensaku, NTT DoCoMo, Inc., Sanno Park Tower, Tokyo 100-6150 (JP); Hongo, Sadayuki, NTT DoCoMo, Inc., Sanno Park Tw., Tokyo 100-6150 (JP)
(74) Representative: Grosse, Wolfgang, Dipl.-Ing.

(57) **Abstract**

A portable terminal 10 according to the present invention is provided with an electronic book coupon storage 12, an electronic book coupon transmitter 14, and an electronic book coupon receiver 15. The electronic book coupon storage 12 stores an electronic book coupon which can be charged with no electronic worth by the portable terminal 10. The electronic book coupon transmitter 14 transmits the electronic book coupon stored in the electronic book coupon storage 12, to an electronic book coupon circulating server 20. The electronic book coupon receiver 15 receives the electronic book coupon charged with electronic worth by the electronic book coupon circulating server 20, from the electronic book coupon circulating server 20.

## Description

### BACKGROUND OF THE INVENTION

### Field of the Invention

The present invention relates to a communication terminal, a server apparatus, an electronic worth charging method, and an electronic worth charging program.

### Related Background Art

The recent increase in data communication speed and development of data compression technologies has realized practical use of information communication systems permitting communication terminals to acquire desired content data from server apparatus through networks such as the Internet and others. In the electronic commerce making use of such systems, electronic value is sometimes used as paying means without use of credit cards or cash.

The electronic value is digitized data which expresses some economical worth (or into which some economical worth is transubstantiated). Examples of the electronic value include electronic money (also called electronic cash or electronic currency or the like) representingmonetaryworth, electronic tickets provided in the prepaid system, and so on. The electronic tickets represent some worth (hereinafter referred to as "electronicworth" ) , for example, book coupons, coupon tickets, and so on.

### SUMMARY OF THE INVENTION

However, the above prior art had the problem as described below. Namely, some electronic values can be charged with a shortfall of electronic worth when the remaining amount of electronic worth becomes small because of use. The charging process of electronic worth is carried out in such a way that in response to a request from a communication terminal, a server apparatus transmits a command to order the charging with an electronic worth, along with the electronic worth to the communication terminal.

The electronic value is usually stored in an IC (Integrated Circuit) card detachably mounted in the communication terminal, in order to limit access from the outside. Therefore, in order to charge the electronic value with the electronic worth, the process based on the above command has to be executed inside the IC card. However, the execution of the externally input command inside the IC card raises concern about injustices such as replication, falsification, etc. of the electronic value, and the risk is extremely high in terms of security.

In order to avoid such drawback, a means to limit access, e.g., to authenticate the validity of the external command into the IC card is also worth considering. However, only one type of electronic value is not always stored in the IC card, but it is also expected that plural types of electronic values will be stored therein. It is very hard in practice to vary the contents of access restrictions on the respective types of electronic values, in order to be ready for such situation.

In view of the above problem, an object of the present invention is therefore to provide a communication terminal, a server apparatus, an electronic worth charging method, and an electronic worth charging program enabling easy charging of electronic value while maintaining high security.

In order to solve the above problem, a communication terminal according to the present invention is a communication terminal comprising: electronic value storing means for storing an electronic value which can be charged with no electronic worth by the communication terminal; electronic value transmitting means for transmitting the electronic value stored in the electronic value storing means, to a server apparatus; and electronic value receiving means for receiving from the server apparatus the electronic value which was charged with an electronic worth by the server apparatus.

A server apparatus according to the present invention is a server apparatus comprising: electronic value receiving means for receiving the electronic value from the communication terminal as set forth; electronic worth charging means for charging the electronic value received by the electronic value receiving means, with an electronic worth; and electronic value transmitting means for transmitting the electronic value charged with the electronic worth by the electronic worth charging means, to the communication terminal.

An electronic worth charging method according to the present invention is an electronic worth charging method for a communication terminal to implement transmission and reception of data to and from a server apparatus, the electronic worth charging method comprising: an electronic value storing step of storing an electronic value which can be charged with no electronic worth by the communication terminal, in storing means; an electronic value transmitting step of transmitting the electronic value stored in the storing means in the electronic value storing step, to the server apparatus; and an electronic value receiving step of receiving from the server apparatus the electronic value which was charged with an electronic worth by the server apparatus.

Another electronic worth charging method according to the present invention is an electronic worth charging method for a server apparatus to implement transmission and reception of data to and from a communication terminal, the electronic worth charging method comprising: an electronic value receiving step of receiving an electronic value from the communication terminal; an electronic worth charging step of charging the electronic value received in the electronic value receiving step, with an electronic worth; and an electronic value transmitting step of transmitting the electronic value charged with the electronic worth in the electronic worth charging step, to the communication terminal.

An electronic worth charging program according to the present invention is an electronic worth charging program for letting a communication terminal configured to implement transmission and reception of data to and from a server apparatus, execute the following processes: an electronic value storing process of storing an electronic value which can be charged with no electronic worth by the communication terminal, in storing means; an electronic value transmitting process of transmitting the electronic value stored in the storing means by the electronic value storing process, to the server apparatus; and an electronic value receiving process of receiving from the server apparatus the electronic value which was charged with an electronic worth by the server apparatus.

According to these aspects of the invention, the electronic value is once transmitted from the communication terminal to the server apparatus, the server apparatus charges the electronic value with the electronic worth, and thereafter the server apparatus again transmits the electronic value to the communication terminal. Namely, the charging with the electronic worth is not carried out on the communication terminal side but is carried out on the server apparatus side. Therefore, no external command is put into the interior of the electronic value storing means (such as an IC card) of the communication terminal during the charging with the electronic worth. Accordingly, it is feasible to prevent the injustices such as the replication, falsification, etc. of the electronic value by a third person or by the user of the communication terminal and thus secure a high security level. It also becomes easier to ensure the security than in the case where the access restrictions are made according to types of electronic values to be charged with the electronic worth, on the communication terminal side. As a result, the electronic value can be readily charged with the electronic worth while the security is maintained high.

The communication terminal according to the present invention is preferably constructed in a configuration further comprising user information storingmeans for storing user information by which a user of the communication terminal can be identified, wherein the electronic value transmitting means transmits the electronic value along with the user information stored in the user information storing means, to the server apparatus.

The server apparatus according to the present invention is preferably constructed in a configuration further comprising: user authenticating means for performing a user authentication process of authenticating the user of the communication terminal, on the basis of the user information transmitted by the electronic value transmitting means of the communication terminal as set forth; and settlement confirming means for performing a settlement confirmation process of confirming settlement about the user and the electronic value of the communication terminal, wherein when the user authentication process by the user authenticating means and the settlement confirmation process by the settlement confirming means are successfully completed, the electronic value transmittingmeans lets the electronicworth charging means charge the electronic value with the electronic worth.

The electronic worth charging method according to the present invention is preferably configured as a method further comprising a user information storing step of storing user informationbywhich a user of the communication terminal can be identified, in the storing means, wherein the electronic value transmitting step is configured to transmit the electronic value along with the user information stored in the storing means in the user information storing step, to the server apparatus.

The electronic worth charging method according to the present invention is preferably configured as a method further comprising a user authenticating step of performing a user authentication process of authenticating the user of the communication terminal, on the basis of the user information transmitted from the communication terminal; and a settlement confirming step of performing a settlement confirmation process of confirming settlement about the user and the electronic value of the communication terminal, wherein in the electronic value transmitting step, when the user authentication process in the user authenticating step and the settlement confirmation process in the settlement confirming step are successfully completed, the electronic value is charged with the electronic worth in the electronic worth charging step.

According to these aspects of the invention, the electronic value transmitted from the communication terminal to the server apparatus is charged with the electronic worth if the authentication of the user of the communication terminal having transmitted the electronic value and the authentication of settlement about the electronic value used by the user both are successfully completed. Therefore, the server apparatus performs the above user authentication to confirm whether the person having ordered the transmission of the electronic value is the principal being the user of the communication terminal, whereby it is feasible to prevent spoofing by a third person. Since the server apparatus performs the above confirmation of settlement, the electronic value charged with the electronic worth can be prevented from being accidentally provided to the user not paying a bill. As a result, the provider of the electronic value can accurately collect the price of the electronic value from the regular user.

In the communication terminal according to the present invention, more preferably, a digital signature is attached to the electronic value stored in the electronic value storing means, by an issuer of the electronic value.

In the electronic worth charging method according to the present invention, more preferably, a digital signature is attached to the electronic value stored in the storing means in the electronic value storing step, by an issuer of the electronic value.

According to these aspects of the invention, the electronic value is accompanied by the digital signature which is encrypted signature information attached for the purpose of ensuring the validity thereof. The digital signature is attached in order to prove the issuer of the electronic value and ensure no falsification in the electronic value, and the attachment of this digital signature makes the electronic value inaccessible to the communication terminal. Accordingly, it is feasible to securely prevent the injustices such as the replication, falsification, etc. of the electronic value. As a result, high security can be ensured about the charging with electronic worth.

In the server apparatus according to the present invention, the electronic value is, for example, an electronic book coupon.

In the electronic worth charging method according to the present invention, the electronic value is, for example, an electronic book coupon.

According to these aspects of the invention, where the user of the communication terminal purchases an electronic book, an object for the purchase is intended and the electronic book coupon with less concern about unauthorized use is used in many cases in comparison with the electronic money. The server apparatus issues and manages such electronic book coupons as a type of the electronic value to circulate them, whereby the sale of electronic books can be promoted more safely and efficiently.

In the server apparatus according to the present invention, the electronic value is, for example, an electronic coupon ticket.

In the electronic worth charging method according to the present invention, the electronic value is, for example, an electronic coupon ticket.

According to these aspects of the invention, the server apparatus issues and manages, as a type of the electronic value, electronic coupon tickets of limited use and with less concern about unauthorized use, as compared with the electronic money, to circulate them, whereby the use of transportation means such as trains, buses, etc. can be promoted more safely and efficiently.

In the electronic worth charging system according to the present invention, preferably, the electronic value storing means of the aforementioned communication terminal is comprised of a tamper-resistant device, and the electronic worth charging means of the aforementioned server apparatus charges the electronic value with the electronic worth inside a tamper-resistant device.

According to the present invention, the electronic value is stored in the electronic value storing means as a tamper-resistant device on the communication terminal side, and the electronic value is charged with the electronic worth inside the tamper-resistant device on the server apparatus side. Accordingly, it is feasible to more securely prevent the injustices such as the leakage, falsification, etc. of the data in the electronic value by a third person or by the user of the communication terminal. As a result, it is feasible to further enhance the confidentiality of the electronic value and the reliability of the system.

A communication terminal according to the present invention is a communication terminal comprising: electronic value storing means for storing an electronic value containing identification information of an issuer; issuer identification information receiving means for receiving identification information of the issuer of the electronic value from a server apparatus; issuer authenticating means for performing an authentication process of authenticating the issuer of the electronic value, on the basis of the identification information of the issuer in the electronic value stored in the electronic value storing means and the identification information of the issuer received from the server apparatus by the issuer identification information receiving means; and electronic worth charging means for charging the electronic value with an electronic value when receiving charge information which is transmitted from the server apparatus if the issuer authenticating means authenticates the issuer of the electronic value and if the validity of a user of the communication terminal is authenticated.

An electronic worth charging method according to the present invention is an electronic worth charging method for a communication terminal to implement transmission and reception of data to and from a server apparatus, the electronic worth charging method comprising: an electronic value storing step of storing an electronic value containing identification information of an issuer, in storing means; an issuer identification information receiving step of receiving the identification information of the issuer of the electronic value from the server apparatus; an issuer authenticating step of performing an authentication process of authenticating the issuer of the electronic value, on the basis of the identification information of the issuer in the electronic value stored in the storing means and the identification information of the issuer received from the server apparatus in the issuer identification information receiving step; and an electronic worth charging step of charging the electronic value with an electronic worth when receiving charge information which is transmitted from the server apparatus if the issuer of the electronic value is authenticated in the issuer authenticating step and if the validity of a user of the communication terminal is authenticated.

A server apparatus according to the present invention is a server apparatus comprising: user authenticating means for, on the basis of user information transmitted from the communication terminal as set forth, performing an authentication process of authenticating the user of the communication terminal; and charge information transmitting means for transmitting charge information for charging the electronic value with an electronic worth, to the communication terminal when the authentication process for the user of the communication terminal is successfully completed by the user authenticating means.

An electronic worth charging method according to the present invention is an electronic worth charging method for a server apparatus to implement transmission and reception of data to and from a communication terminal, the electronic worth charging method comprising: a user authenticating step of performing an authentication process of authenticating a user of the communication terminal, on the basis of user information transmitted from the communication terminal as set forth; and a charge information transmitting step of transmitting charge information for charging the electronic value with an electronic worth, to the communication terminal when the authentication process for the user of the communication terminal is successfully completed in the user authenticating step.

According to these aspects of the invention, the electronic value is charged with the electronic worth upon reception of the charge information which is transmitted from the server apparatus if the issuer of the electronic value is authenticated and if the validity of the user of the communication terminal is authenticated. Namely, the electronic value is charged with the electronic worth only after completing both the authentication of the issuer of the electronic value being an object of charging with the electronic worth and the authentication of the user of the communication terminal having requested the charging with the electronic worth (cross certification). Accordingly, it is feasible to prevent the injustices such as the replication, falsification, etc. of the electronic value by a third person or by the user of the communication terminal and thus ensure a high security level. It also becomes easier to ensure the security than in the case where access restrictions are made according to electronic values to be charged with the electronic worth, on the communication terminal side. As a result, the electronic value can be readily charged with the electronic worth while the security is maintained high.

The server apparatus according to the present invention is preferably constructed in a configuration further comprising settlement confirming means for performing a settlement confirmation process of confirming settlement about the user and the electronic value of the communication terminal, wherein when the user authentication process by the user authenticating means and the settlement confirmation process by the settlement confirming means are successfully completed, the charge information transmitting means transmits the charge information to the communication terminal.

The electronic worth charging method according to the present invention is preferably configured as a method further comprising a settlement confirming step of performing a confirmation process of confirming settlement about the user and the electronic value of the communication terminal, wherein when the user authentication process in the user authenticating step and the settlement confirmation process in the settlement confirming step are successfully completed, the charge information is transmitted to the communication terminal in the charge information transmitting step.

According to these aspects of the invention, the electronic value transmitted from the communication terminal to the server apparatus is charged with the electronic worth if the authentication of the user of the communication terminal having transmitted the electronic value and the authentication of settlement about the electronic value used by the user both are successfully completed. Therefore, the server apparatus performs the above user authentication to confirm whether the person having ordered the transmission of the electronic value is the principal being the user of the communication terminal, whereby it is feasible to prevent spoofing by a third person. Since the server apparatus performs the above confirmation of settlement, the electronic value charged with the electronic worth can be prevented from being accidentally provided to the user not paying a bill. As a result, the provider of the electronic value can accurately collect the price of the electronic value from the regular user.

In the server apparatus according to the present invention, more preferably, the electronic value is an electronic book coupon.

In the electronic worth charging method according to the present invention, more preferably, the electronic value is an electronic book coupon.

According to these aspects of the invention, where the user of the communication terminal purchases an electronic book, an object for the purchase is intended and the electronic book coupon with less concern about unauthorized use is used in many cases in comparison with the electronic money. The server apparatus issues and manages such electronic book coupons as a type of the electronic value to circulate them, whereby the sale of electronic books can be promoted more safely and efficiently.

In the server apparatus according to the present invention, more preferably, the electronic value is an electronic coupon ticket.

In the electronic worth charging method according to the present invention, more preferably, the electronic value is an electronic coupon ticket.

According to these aspects of the invention, the server apparatus issues and manages, as a type of the electronic value, electronic coupon tickets of limited use and with less concern about unauthorized use, as compared with the electronic money, to circulate them, whereby the use of transportation means such as trains, buses, etc. can be promoted more safely and efficiently.

Furthermore, just like the electronic worth charging systems according to the present invention, the present invention may also be applied to construction and operation of an information processing system comprising the aforementioned communication terminal and the aforementioned server apparatus and configured to implement transmission and reception of the electronic value between the communication terminal and the server apparatus.

The present invention will become more fully understood from the detailed description given herein below and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a schematic diagram showing the hardware configuration of the electronic worth charging system.
Fig. 2 is a schematic diagram showing the hardware configuration of the portable terminal.
Fig. 3 is a schematic diagram showing the hardware configuration of the electronic book coupon circulating server.
Fig. 4 is a conceptual diagram showing the functional configuration of the electronic worth charging system in the first embodiment.
Fig. 5 is a flowchart showing the flow of processing executed by the electronic worth charging system in the first embodiment.
Fig. 6 is a conceptual diagram showing the functional configuration of the electronic worth charging system in the second embodiment.
Fig. 7 is a flowchart showing the flow of processing executed by the electronic worth charging system in the second embodiment.

### DESCRIPTION OF THE PREFERRED EMBODIMENTS

### First Embodiment

The electronic worth charging system according to the first embodiment of the present invention will be described below with reference to the accompanying drawings. The description is based on the premise that the present system is constructed under the condition that the user of the communication terminal purchases an electronic book by use of an electronic book coupon. The electronic book coupon is provided from a server apparatus managed by an issuer of the electronic book coupon through a network to the user of the portable terminal, and the electronic book is marketed and distributed likewise through the network from a server apparatus managed by a provider of the electronic book.

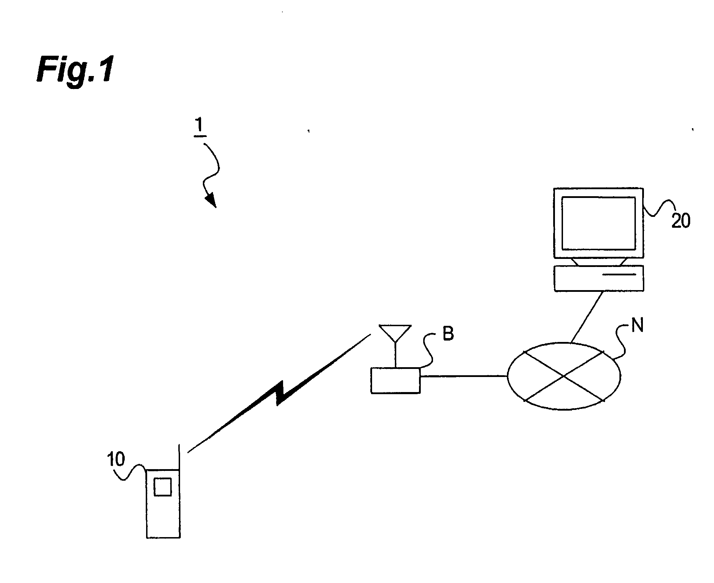

The configuration will be described first. Fig. 1 is a schematic diagram showing an example of the overall configuration of the electronic worth charging system 1 in the present embodiment. As shown in Fig. 1, the electronic worth charging system 1 is mainly comprised of a portable terminal 10 (corresponding to the communication terminal) and an electronic book coupon circulating server 20 (corresponding to the server apparatus). The portable terminal 10 is connected via a base station B and a network N to the electronic book coupon circulating server 20, so that the portable terminal 10 and the electronic book coupon circulating server 20 are able to transmit and receive data to and from each other.

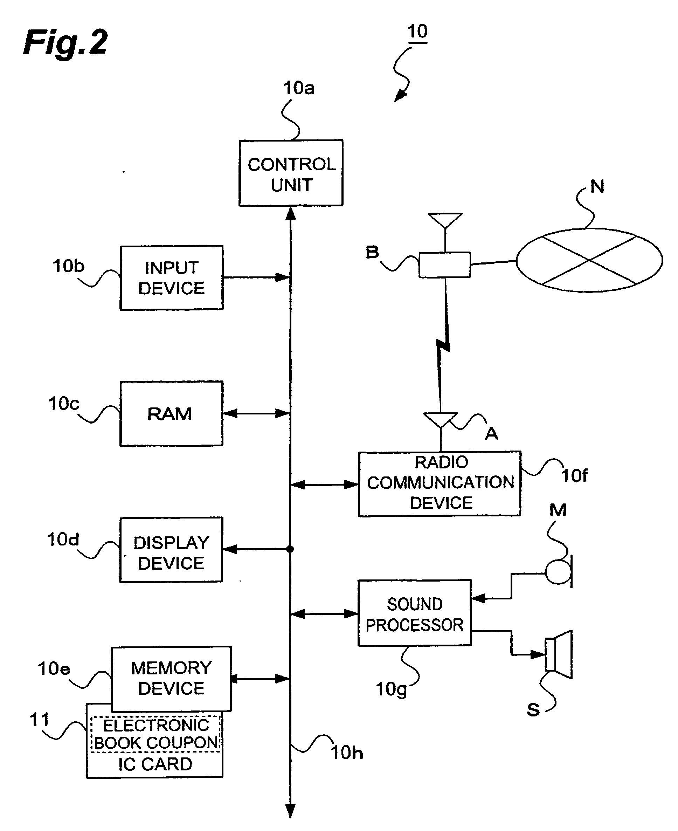

The hardware configuration of each terminal equipment constituting the electronic worth charging system 1 will be described below. Fig. 2 is a hardware configuration diagram of the portable terminal 10. The portable terminal 10 is comprised of a control unit 10a, an input device 10b, a RAM 10c, a display device 10d, a memory device 10e incorporating an IC card 11 in a detachable state, a radio communication device 10 f having an antenna A in a retractable state, and a sound processing device 10g These devices are electrically connected each through a bus 10h so as to be able to transmit and receive various signals to and from each other.

Since the portable terminal 10 is terminal equipment constituting the major part of the electronic worth charging system according to the present invention, hardware configurations of the respective devices will be described below in more detail. The control unit 10a retrieves a program stored in the memory device 10e into the RAM 10c and performs concentrated control over each of the parts according to the program. Namely, the control unit 10a executes a variety of processes including transmission of the electronic book coupon and user information, reception of the electronic book coupon, etc. in accordance with an input signal from the input device 10b and the program retrieved into the RAM 10c and temporarily saves the processing result in the RAM 10c. Then the control unit stores the processing result saved in the RAM 1 into a predetermined area inside the memory device 10e according to need.

The input device 10b is provided with various operation buttons to order ON/OFF of power, selection of functions, etc., and these various operation buttons are depressed alone or in combination to output an input signal according to a command to the control unit 10a.

The RAM (Random Access Memory) 10c is comprised of a volatile semiconductor memory and is configured to temporarily save the program or data retrieved from the storage device 10e described hereinafter, during the various processes executed by the control unit 10a. The RAM 10c also has the function of VRAM (Video RAM) for temporarily saving data to be displayed on the display device 10d.

The display device 10d is comprised of an LCD (Liquid Crystal Display), an EL (Electro Luminescence) device, or the like, and is configured to display display data on a screen according to a display signal supplied from the control unit 10a.

The memory device 10e is comprised of a nonvolatile semiconductormemorysuchas anEEPROM (ElectricallyErasable and Programmable ROM) or the like, and is configured to store data necessary for execution of the various processes, data generated as a result of execution of the various processes, and so on. The memory device 10e is equipped with an IC (Integrated Circuit) card 11 in a detachable state. The IC card 11 stores the electronic book coupon described later.

The radio communication device 10f controls radio communication with the base station B. Specifically, the radio communication device 10f is a circuit having a modem (not shown) for modulating and demodulating signals, and a codec (not shown) for coding and decoding signals, and is equipped with the antenna A. The antenna A is retractably mounted in the upper part of a housing of the portable terminal 10 and is adapted to transmit and receive radio waves to and from the base station B.

The sound processing device 10g is comprised of a converter, an amplifier, etc. and is equipped with a microphone M and a speaker S. The sound processing device 10g is configured to convert audio data from the control unit 10a into analog signals by the converter and emit sound from the speaker S through the amplifier, during calls. The sound processing device 10g is also configured to convert audio signals from the microphone M into digital signals by the converter and output the digital signals to the control unit 10a/ during calls.

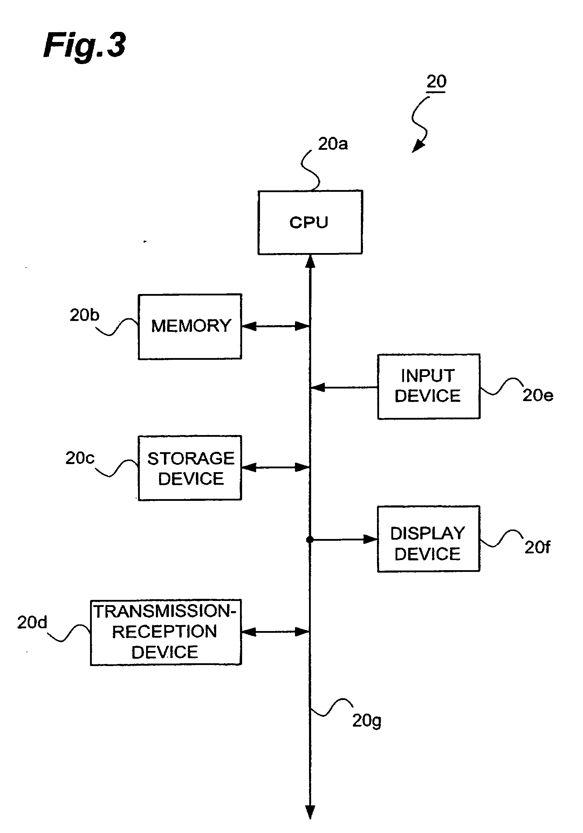

Fig. 3 is a hardware configuration diagram of the electronic book coupon circulating server 20. The electronic book coupon circulating server 20 is comprised of a CPU 20a, a memory 20b such as a RAM (RandomAccessMemory), a storage device 20c such as a hard disk, a transmission-reception device 20d such as a communication card configured to implement transmission and reception of data to and from the portable terminal 10, an input device 20e such as a keyboard, a mouse, etc., and a display device 20f such as a display unit. The CPU 20a, memory 20b, storage device 20c, transmission-reception device 20d, input device 20e, and display device 20f are electrically connected so as to be able to send and receive various signals through a bus 20g.

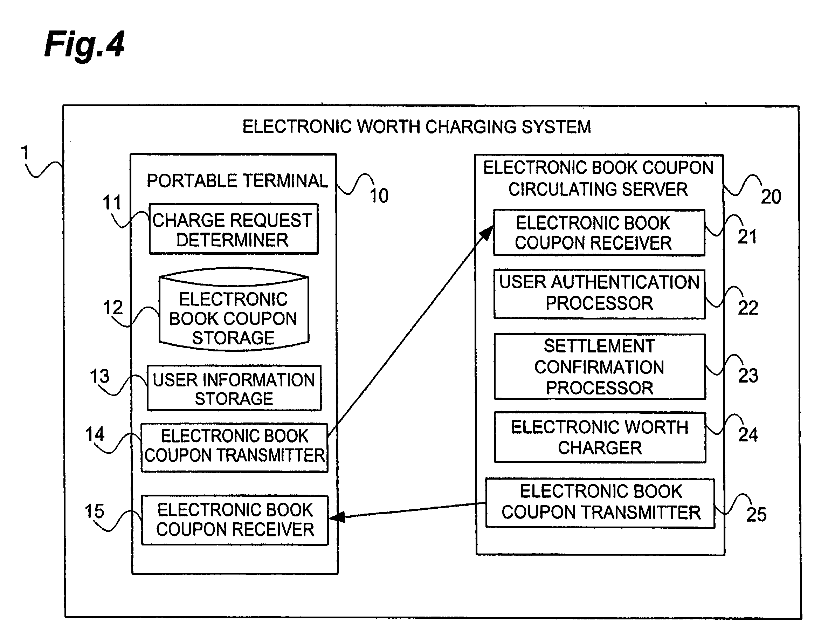

Fig. 4 is a system configuration diagram showing the functional configuration of the electronic worth charging system 1 in the present embodiment. As shown in Fig. 4, the portable terminal 10 has a charge request determiner 11, an electronic book coupon storage 12, a user information storage 13, an electronic book coupon transmitter 14, and an electronic book coupon receiver 15.

The charge request determiner 11 determines whether a charge request is to be transmitted to the electronic book coupon circulating server 20, in accordance with a command from the user of the portable terminal 10. Here the charging with electronic worth is to update data in the electronic book coupon to add an electronic worth. This makes it feasible for the user of the portable terminal 10 to purchase a desired electronic book.

The electronic book coupon storage 12 stores an electronic book coupon in a predetermined area. This electronic book coupon is one that was acquired from the electronic book coupon circulating server 20, and is preliminarily provided with a digital signature by a provider (including an issuer) of the electronic book coupon. The digital signature proves the issuer of the electronic book coupon and ensures no falsification in the electronic book coupon. With this digital signature being attached to the electronic book coupon, the electronic book coupon can be charged with no electronic worth on the portable terminal 10 side.

The electronic book coupon also contains information indicating the remaining amount of electronic worth, and a decryption key for decryption of an encrypted electronic book. The electronic book coupon storage 12 is constructed of an IC card as a tamper-resistant device in view of confidentiality of data, reliability of the system, and so on. In order to prevent replication of electronic worth, no command to order execution of replication of electronic worth is present in the IC card.

The user information storage 13 stores information about the user of the portable terminal 10 (hereinafter referred to as "user information"). The user information is information uniquely allocated to each subscriber of the portable terminal (e.g., a user ID, a password, etc.), in order to identify the user of the portable terminal 10. The user information storage 13 is preferably constructed of an IC card or an IC-card-equivalent tamper-resistant device in terms of confidentiality of data, reliability of the system, and so on. More specifically, the user information storage 13 is comprised of a UIM (User Identity Module) or SIM (Subscriber Identity Module) or the like.

The electronic book coupon transmitter 14 is configured as follows: when the charge request determiner 11 determines the presence of a charge request, the transmitter 14 retrieves the electronic book coupon as an object for charging with electronic worth from the electronic book coupon storage 12 and also retrieves the user information of the portable terminal 10 from the user information storage 13. Then the electronic book coupon transmitter 14 transmits the thus retrieved electronic book coupon along with the user information to the electronic book coupon circulating server 20.

The electronic book coupon receiver 15 receives the electronic book coupon charged with an electronic worth, transmitted from the electronic book coupon circulating server 20, and again stores it into the electronic book coupon storage 12.

As shown in Fig. 4, the electronic book coupon circulating server 20 has an electronic book coupon receiver 21, a user authentication processor 22, a settlement confirmation processor 23, an electronic worth charger 24, and an electronic book coupon transmitter 25. The electronic book coupon circulating server 20 is a server apparatus managed by an electronic book coupon circulating company providing electronic book coupons in the prepaid system (regardless of whether or not compensation is received).

The electronic book coupon receiver 21 receives the electronic book coupon as an object of charging with electronic worth alongwith the user information, transmitted from the electronic book coupon transmitter 14 of the portable terminal 10.

The user authentication processor 22 executes a user authentication process of authenticating the user of the portable terminal 10, on the basis of the user information received by the electronic book coupon receiver 21. The user authentication process is carried out, for example, in such a way that the received user information is collated with a purchaser list of electronic book coupons preliminarily registered in the electronic book coupon circulating server 20. When the result of the collation is that the purchaser list contains user information agreeing with the pertinent user information, the user associated with the user information is judged as a regular user. Conversely, when the purchaser list contains no user information agreeing with the pertinent user information, the user associated with the user information is judged not to be the regular user.

The settlement confirmation processor 23 transmits information necessary for a settlement process, including the user information, the amount of electronic worth to be charged, etc., to a server apparatus for settlement (not shown) connected through a network. Then the settlement confirmation processor 23 receives information indicating whether the settlement process was successfully completed or not, from the settlement server apparatus, and determines whether the settlement is completed or not, based on the information.

The electronic worth charger 24 charges the electronic book coupon received by the electronic book coupon receiver 21, with the electronic worth.

The electronic book coupon transmitter 25 transmits the electronic book coupon charged with the electronic worth by the electronic worth charger 24, to the portable terminal 10.

The operation of the electronic worth charging system 1 in the present embodiment will be described below, together with the electronic worth charging method according to the present invention. Each of the steps described below is implemented when the control unit 10a and CPU 20a execute the programs stored in the memory device 10e shown in Fig. 2 and in the storage device 20c shown in Fig. 3.

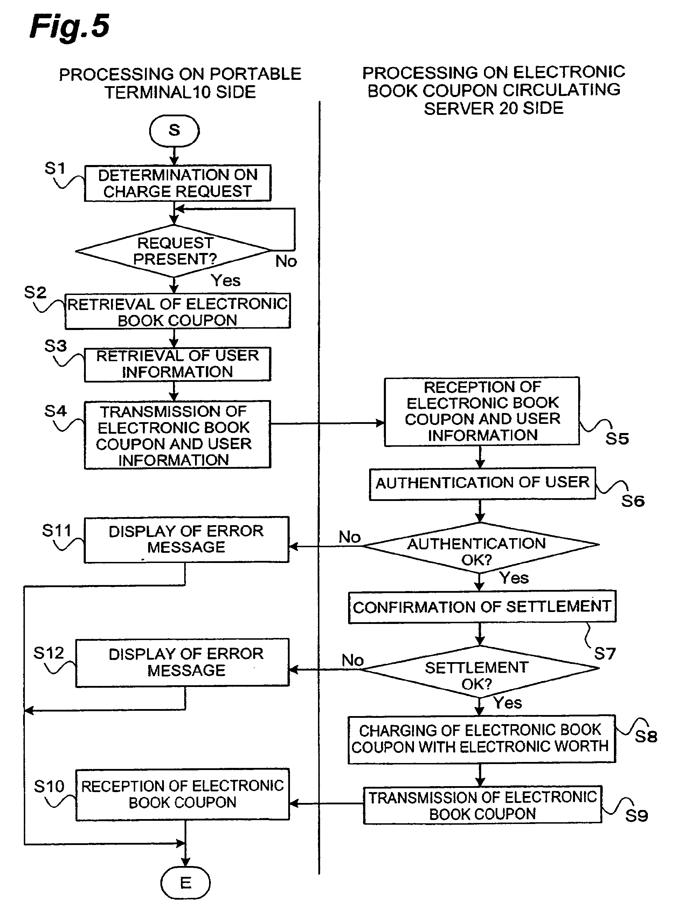

Fig. 5 is a flowchart showing the flow of information processing executed by the electronic worth charging system
1. In S1, the charge request determiner 11 awaits a charge request in order to make a determination on whether the charge request is to be transmitted to the electronic book coupon circulating server 20, based on a command from the user of the portable terminal 10. Here the charge request does not always have to be transmitted when the remaining amount of electronic worth in the electronic book coupon reaches 0; the timing of transmission is arbitrary. The charge request is transmitted to the electronic book coupon circulating server 20 in order to replenish the electronic value with the electronic worth, for example, when the remaining amount of electronic worth in the electronic book coupon becomes below a predetermined amount or when the amount of electronic worth is insufficient for purchase of a desired electronic book.

When in S1 the charge request determiner 11 confirms the charge request, the electronic book coupon transmitter 14 first retrieves the electronic book coupon as an object for charging with electronic worth, i.e., an object of transmission from the electronic book coupon storage 12 (S2). The electronic book coupon storage 12 may contain a plurality of electronic book coupons or other electronic values, and in that case the user of the portable terminal 10 selects an electronic book coupon as an object for charging with electronic worth. Subsequently, the electronic book coupon transmitter 14 retrieves the user information about the user of the portable terminal 10 from the user information storage 13 (S3) .

Then the electroni-c book coupon transmitter 14 transmits to the electronic book coupon circulating server 20 the electronic book coupon retrieved from the electronic book coupon storage 12 in S2 and the user information retrieved from the user information storage 13 in S3 (S4). The electronic book coupon receiver 21 of the electronic book coupon circulating server 20 receives the transmitted electronic book coupon and user information (S5). Preferably, the transmission and reception of the electronic book coupon and user information is carried out by cipher communication using a predetermined protocol (e.g., SSL (Secure Socket Layer)), in order to prevent the leakage of data.

In S6, the user authentication processor 22 performs the user authentication process for the user of the portable terminal 10. Namely, the user authentication processor 22 determines whether the user of the portable terminal 10 is the regular user permitted to request the charging with electronic worth (normally, a holder of the electronic book coupon), based on the user information received by the electronic book coupon receiver 21.

When the user authentication results in verifying that the user of the portable terminal 10 is the regular user, the settlement confirmation processor 23 performs the settlement process about the user of the portable terminal 10 (S7) . Namely, the amount according to the electronic worth to be charged is charged to the user of the portable terminal 10 specified by the above user authentication process. This settlement process may be conducted by any method, e.g., payment with use of a credit card or a cash card, payment with a check of a predetermined format, or the like, but it is desirable to involve a third-party organization as an intermediate, in view of security and reliability. This settlement process does not have to be carried out by the electronic book coupon circulating server 20, but may be executed by a server apparatus dedicated to the settlement process, externally connected, on the basis of a settlement command from the electronic book coupon circulating server 20.

After the settlement process is successfully completed, the electronic worth charger 24 charges the electronic book coupon received in S5, with the electronic worth (S8). The maximum amount of electronic worth to be charged into the electronic book coupon can be set to an arbitrary value by an administrator of the electronic book coupon circulating server 20 being the provider of the electronic book coupon. After the charging with electronic worth is completed, the electronic book coupon transmitter 25 transmits the electronic book coupon with the digital signature of the issuer to the portable terminal 10 (S9).

In S10 the electronic book coupon receiver 15 of the portable terminal 10 then receives the electronic book coupon charged with the electronic worth. The received electronic book coupon is used for purchase of electronic books by the user of the portable terminal 10. When the user authentication process in S6 results in failure of user authentication, or when the settlement confirmation process in S7 results in failure in successful completion of the settlement process, the electronic book coupon circulating server 20 transmits an error message indicating the fact to the portable terminal 10 (S11 or S12). The transmitted error message is displayed on the display device 10d of the portable terminal 10 to notify the user.

In the electronic worth charging system 1 according to the present invention, as described above, the portable terminal 10 according to the present invention is provided with at least the electronic book coupon storage 12, the electronic book coupon transmitter 14, and the electronic book coupon receiver 15. The electronic book coupon storage 12 stores the electronic book coupon which can be charged with no electronic worth by the portable terminal 10. The electronic book coupon transmitter 14 transmits the electronic book coupon stored in the electronic book coupon storage 12, to the electronic book coupon circulating server 20. The electronic book coupon receiver 15 receives the electronic book coupon charged with the electronic worth by the electronic book coupon circulating server 20, from , the electronic book coupon circulating server 20.

Namely, the electronic book coupon is once transmitted from the portable terminal 10 to the electronic book coupon circulating server 20, is charged with the electronic worth in the electronic book coupon circulating server 20, and thereafter is transmitted again from the electronic book coupon circulating server 20 to the portable terminal 10. Namely, the charging with electronic worth is not carried out on the portable terminal 10 side but is carried out on the electronic book coupon circulating server 20 side. For this reason, no command is entered from the outside into the IC card as the electronic value storing means during the charging with electronic worth. Accordingly, it is feasible to prevent the injustices such as the replication, falsification, etc. of the electronic book coupon and ensure a high security level. The securement of security is relatively easier than in the case where access restrictions are made according to types of electronic book coupons charged with electronic worth or the like on the portable terminal 10 side.

In the electronic worth charging system 1 according to the present invention, the electronic book coupon circulating server 20 according to the present invention is provided with the user authentication processor 22, the settlement confirmation processor 23, and the electronic book coupon transmitter 25. The user authentication processor 22 performs the user authentication process for the user of the portable terminal 10 on the basis of the user information transmitted from the portable terminal 10. The settlement confirmation processor 23 performs the confirmation process of settlement about the user and electronic book coupon of the portable terminal 10. The electronic book coupon transmitter 25 charges the electronic book coupon with the electronic worth when the user authentication process and the settlement confirmation process are successfully completed.

Accordingly, the electronic book coupon circulating server 20 executes the user authentication process to confirm whether the person having ordered the transmission of the electronic book coupon is the principal being the user of the portable terminal 10 (personal identification) , whereby it is feasible to prevent spoofing by a third person. The electronic book coupon circulating server 20 executes the confirmation process of settlement, whereby the electronic book coupon charged with the electronic worth can be prevented from being accidentally provided to the user making no payment. As a result, the provider of the electronic book coupon can accurately collect the compensation for the electronic book coupon from the regular user.

### Second Embodiment

The second embodiment of the present invention will be described below with reference to the accompanying drawings. The hardware configuration of the electronic worth charging system in the present embodiment is much the same as that of the electronicworth charging system 1 detailed in the first embodiment. Therefore, the components will be denoted by the same reference symbols, without description thereof, and differences from the first embodiment will be described in detail.

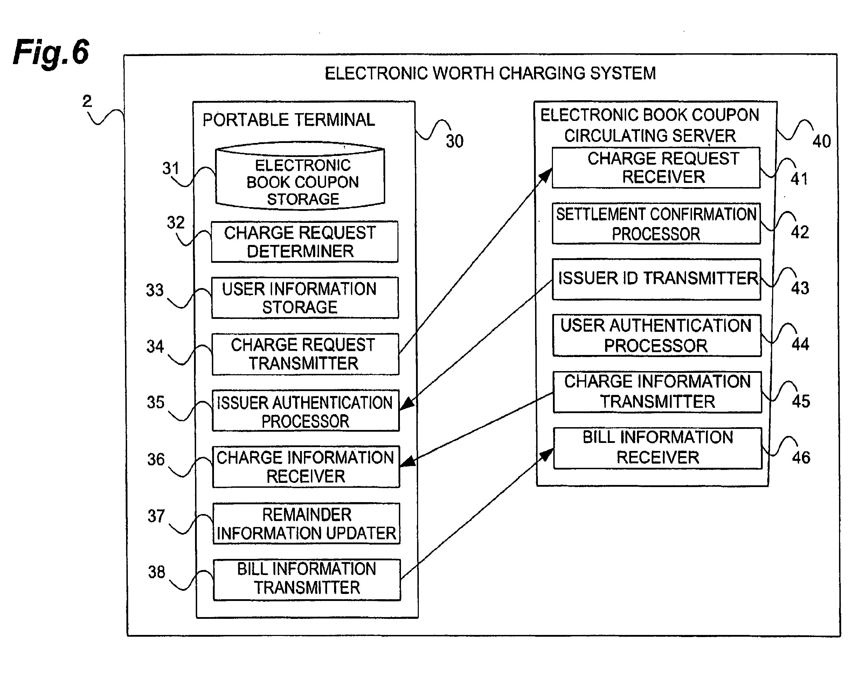

Fig. 6 is a system configuration diagram showing the functional configuration of the electronic worth charging system 2 in the present embodiment. The electronic worth charging system 2 is provided with a portable terminal 30 and an electronic book coupon circulating server 40. As shown in Fig. 6, the portable terminal 30 has an electronic book coupon storage 31, a charge request determiner 32, a user information storage 33, a charge request transmitter 34, an issuer authentication processor 35, a charge information receiver 36, a remainder information updater 37, and a bill information transmitter 38.

The electronic book coupon storage 31 stores an electronic book coupon in a predetermined area. This electronic book coupon is one acquired from the electronic book coupon circulating server 40. The electronic book coupon contains an issuer IDbeing identification information for uniquely specifying a provider (including an issuer) of the electronic book coupon. The electronic book coupon storage 31 is comprised of an IC card as a tamper-resistant device, in terms of the confidentiality of data, reliability of the system, and so on.

The charge request determiner 32 determines whether a charge request is to be transmitted to the electronic book coupon circulating server 40, in accordance with a command from the user of the portable terminal 30. Here the charging with electronic worth is to update remainder information (data indicating the amount of unused electronic worth) in the electronic book coupon to add an electronic worth. This makes it feasible for the user of the portable terminal 30 to purchase a desired electronic book.

The user information storage 33 stores the foregoing user information about the user of the portable terminal 30. The user information storage 33 is preferably constructed of an IC card or an IC-card-equivalent tamper-resistant device, in terms of the confidentiality of data, reliability of the system, and so on. More specifically, the user information storage 33 is comprised of a UIM (User Identity Module) or SIM (Subscriber Identity Module) or the like.

The charge request transmitter 34 is configured as follows: when the charge request determiner 32 confirms a transmission command for a charge request, the charge request transmitter 34 acquires the user information of the portable terminal 30 from the user information storage 33 . The charge request transmitter 34 transmits the charge request with the user information to the electronic book coupon circulating server 40.

The issuer authentication processor 35 receives the issuer ID transmitted from the electronic book coupon circulating server 40 managed by the issuer of the electronic book coupon. The issuer authentication processor 35 collates the issuer ID in the electronic book coupon stored in the electronic book coupon storage 31, with the issuer ID transmitted from the electronic book coupon circulating server 40, to authenticate the issuer of the electronic book coupon. Namely, the issuer authentication processor 35 judges the issuer of the electronic book coupon requested to be charged, as a regular issuer when the above issuer IDs agree with each other.

The charge information receiver 36 receives the aforementioned charge information from the electronic book coupon circulating server 40. The charge information is data containing a record of electronic worth for replenishing the electronic book coupon, for example, when the remainder of the electronic book coupon becomes small.

The remainder information updater 37 updates the remainder information included in the electronicbook coupon, with reference to the electronic worth recorded in the charge information received by the charge information receiver 36. This results in replenishing the electronic book coupon, whereby the user of the portable terminal 30 can purchase a desired electronic book.

The bill information transmitter 38 generates bill information for specifying the added amount upon the update of the remainder information, in conjunction with the update process of the remainder information by the remainder information updater 37, and transmits the bill information to the electronic book coupon circulating server 40.

As shown in Fig. 6, the electronic book coupon circulating server 40 has a charge request receiver 41, a settlement confirmation processor 42, an issuer ID transmitter 43, a user authentication processor 44, a charge information transmitter 45, and a bill information receiver 46.

The charge request receiver 41 receives the charge request and user information transmitted from the charge request transmitter 34 of the portable terminal 30.

In conjunction with the reception of the charge request by the charge request receiver 41, the settlement confirmation processor 42 sends the user information and the information necessary for the settlement process for the amount of electronic worth to be charged or the like to a server apparatus for settlement (not shown) connected through a network. Then the settlement confirmation processor 42 receives information indicating whether the settlement process was successfully completed, from the settlement server apparatus to determine whether the settlement is completed or not, based on the information.

When the settlement confirmation processor 42 confirms that the settlement process about the user of the portable terminal 30 was successfully completed, the issuer ID transmitter 43 transmits to the portable terminal 30 the issuer ID indicating that the administrator of the electronic book coupon circulating server 40 is the regular issuer of the electronic book coupon.

The user authentication processor 44 executes the user authentication process for the user of the portable terminal 30 on the basis of the user information received by the charge request receiver 41. The user authentication processes much the same as that by the user authentication processor 22 detailed in the first embodiment, and thus the detailed description thereof is omitted herein.

When the user authentication processor 44 confirms that the user authentication process for the portable terminal 30 was successfully completed, the charge information transmitter 45 transmits the charge information to the portable terminal 30.

The bill information receiver 46.receives the bill information transmitted from the bill information transmitter 38 of the portable terminal 30.

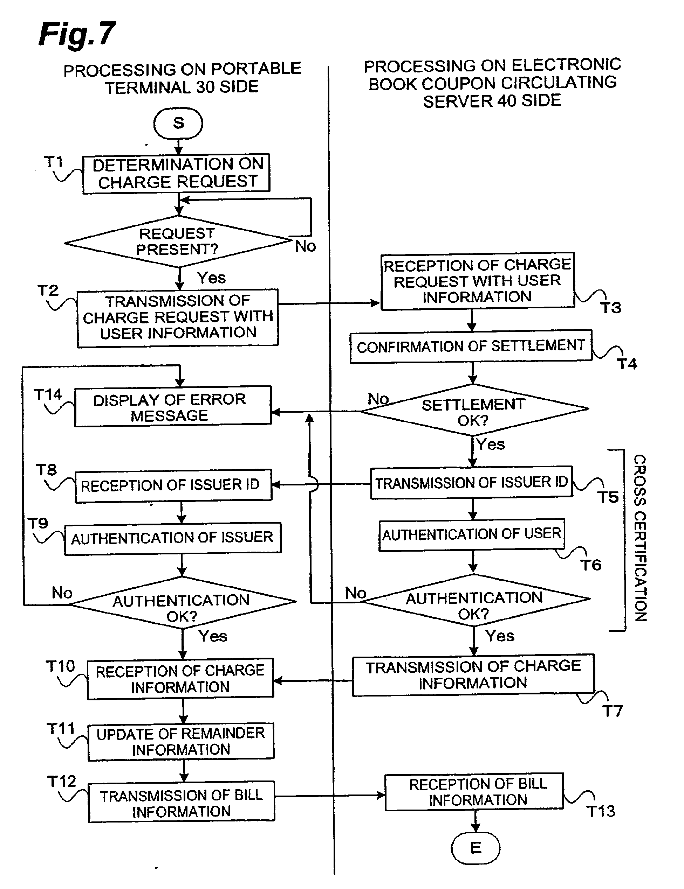

Fig. 7 is a flowchart showing the flow of information processing executed by the electronic worth charging system 2 in the second embodiment. In T1, the charge request determiner 32 awaits a charge request in order to determine whether the charge request is to be transmitted to the electronic book coupon circulating server 40, based on a command from the user of the portable terminal 30.

When in T1 the charge request determiner 32 confirms the charge request, the charge request transmitter 34 first retrieves the user information about the user of the portable terminal 30 from the user information storage 33. The charge request transmitter 34 transmits the charge request along with the retrieved user information to the electronic book coupon circulating server 40 (T2).

The transmitted charge request and user information are received by the charge request receiver 41 of the electronic book coupon circulating server 40 (T3). Preferably, the transmission and reception of the user information is carried out by cipher communication using a predetermined protocol (e.g., SSL (Secure Socket Layer)), in order to prevent the leakage of data.

In T4, the settlement confirmation processor 42 performs the settlement confirmation process about the user of the portable terminal 30 (T4) . Namely, performed herein is the confirmation process to confirm whether the amount according to the electronic worth to be charged can be charged to the user of the portable terminal 30 specified by the above user information.

After the settlement confirmation process is successfully completed, the issuer ID transmitter 43 transmits the aforementioned issuer ID to the portable terminal 30 (T5).

In subsequent T6, the user authentication processor 44 performs the user authentication process for the user of the portable terminal 30. Namely, the user authentication processor 44 determines whether the user of the portable terminal 30 is the regular user (normally, a holder of the electronic book coupon) permitted to request the charging with electronic worth, based on the user information received by the charge request receiver 41.

When the user authentication results in confirming that the user of the portable terminal 30 is the regular user, the charge information transmitter 45 transmits the charge information (T7). Preferably, the transmission and reception of the charge information is carried out by cipher communication using the predetermined protocol, in order to prevent the leakage of data.

In T8, the issuer authentication processor 35 receives the issuer ID transmitted by the issuer ID transmitter 43 in T5. The received issuer ID is collated with the issuer ID in the electronic book coupon stored in the electronic book coupon storage 31, and the issuer authentication processor 35 authenticates the issuer of the electronic book coupon (T9).

In T10, the charge information receiver 36 receives the charge information transmitted from the charge information transmitter 45 of the electronic book coupon circulating server 40. When the charge information is received and when the issuer authentication in T9 results in confirming that the issuer corresponding to the issuer ID is the regular issuer (the issuer of the electronic book coupon as an object of charging), the remainder information updater 37 updates the remainder information of the electronic book coupon. Namely, it increases the amount of electronic worth recorded in the electronic book coupon (T11).

In T12, the bill information transmitter 38 transmits the bill information generated thereby, to the electronic book coupon circulating server 40. In T13, the bill information receiver 46 of the electronic book coupon circulating server 40 receives the bill information transmitted by the bill information transmitter 38. Preferably, the transmission and reception of the bill information is carried out by cipher communication using the predetermined protocol, in order to prevent the leakage of data.

If successful completion is not made in either of the settlement confirmation process in T4, the user authentication process in T6, and the issuer authentication process in T9 (in the case of failure in authentication), an error message indicating the fact is displayed on the display device of the portable terminal 30 (T14).

As described above, the electronic worth charging system 2 according to the present invention is configured to execute the both authentication processes (cross certification) of the issuer authentication process of the electronic book coupon as an object for charging with electronic worth (corresponding to T8-T10) and the user authenticationprocess of the portable terminal 30 requesting the charging with electronic worth (corresponding to T5-T7) . Furthermore, the electronic book coupon is charged with the electronic worth only after execution of the settlement confirmation process about the user and electronic book coupon of the portable terminal 30. Accordingly, it is feasible to prevent the injustices such as the replication, falsification, etc. of the electronic book coupon by a third person or by the user of the portable terminal 30 and secure the high security level. The securement of security is easier than in the case where access restrictions are made according to attributes or types of electronic book coupons to be charged with electronic worth on the portable terminal 30 side. As a result, the electronic book coupon can be readily charged with the electronic worth while the security is maintained high.

It is noted that the description in each of the above embodiments is just a preferred example of the electronic worth charging system according to the present invention and that the present invention is by no means intended to be limited to it. For example, it was described above in each of the above embodiments that the electronic value was assumed to be the electronic book coupon, but the electronic value may be an electronic coupon ticket, an electronic commuter pass, an electronic railway ticket, or the like. These electronic values are preliminarily restricted to specific targets of use or purchase and thus have the advantage of less concern about unauthorized use, as compared with the electronic money and others.

The portable terminal does not have to be limited to be one that can be carried like the PDA or personal computer, and the portable terminal is enough to be a information apparatus(communication terminal) has the communication function. Besides, the terminal itself may be one without the communication function. In this case, the portable terminal can perform communication through an expansion device such as a cradle or the like.

Described last are a program for implementing the electronic worth charging technology according to the present invention and a computer-readable recording medium (hereinafter referred to simply as "recording medium") in which the program is recorded. The recording medium is a medium that can induce change states of energy such as magnetism, light, electricity, or the like according to the description, contents of the program against a reading device provided as one of hardware resources of general-purpose computers or the like and that can transmit the description contents of the program to the reading device in the format of signals corresponding to the change states. Such recording media include, for example, media detachably mounted on computers (including the portable terminals, PHS terminals, etc.) like IC cards of UIM or the like, magnetic disks, optical disks, and magnetooptical disks, and nonvolatile semiconductor memories including HDs (Hard Disks) fixedly incorporated in the computers, firmware integrally fixed in the computers, and so on.

The above program may be configured so that part or the whole thereof is transmitted from another device through a transmission medium such as a communication line and received by a communication means of each terminal equipment according to the present invention to be recorded therein. Conversely, the above program may also be configured to be transmitted from each terminal equipment according to the present invention through the transmission medium to another device to be installed therein.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A communication terminal comprising:
electronic value storing means for storing an electronic value which can be charged with no electronic worth by the communication terminal;
electronic value transmitting means for transmitting said electronic value stored in the electronic value storing means, to a server apparatus; and
electronic value receiving means for receiving from the server apparatus the electronic value which was charged with an electronic worth by said server apparatus.

2. The communication terminal according to Claim 1, further comprising user information storing means for storing user information by which a user of the communication terminal can be identified,
wherein said electronic value transmitting means transmits said electronic value along with the user information stored in the user information storing means, to the server apparatus.

3. The communication terminal according to Claim 1, wherein a digital signature is attached to said electronic value stored in the electronic value storing means, by an issuer of the electronic value.

4. A server apparatus comprising:
electronic value receiving means for receiving the electronic value from the communication terminal as set forth in Claim 1;
electronic worth charging means for charging the electronic value received by the electronic value receiving means, with an electronic worth; and
electronic value transmitting means for transmitting the electronic value charged with the electronic worth by the electronic worth charging means, to the communication terminal.

5. The server apparatus according to Claim 4, further comprising:
user authenticating means for performing a user authentication process of authenticating the user of the communication terminal, on the basis of the user information transmitted by the electronic value transmitting means of the communication terminal; and
settlement confirming means for performing a settlement confirmation process of confirming settlement about the user and the electronic value of the communication terminal,
wherein when the user authentication process by the user authenticating means and the settlement confirmation process by the settlement confirming means are successfully completed, the electronic value transmitting means lets the electronic worth charging means charge the electronic value with the electronic worth.

6. An electronic worth charging method for a communication terminal to implement transmission and reception of data to and from a server apparatus, said electronic-worth charging method comprising:
an electronic value storing step of storing an electronic value which can be charged with no electronic worth by the communication terminal, in storing means;
an electronic value transmitting step of transmitting the electronic value stored in the storing means in the electronic value storing step, to the server apparatus; and
an electronic value receiving step of receiving from the server apparatus the electronic value which was charged with an electronic worth by the server apparatus.

7. An electronic worth charging method for a server apparatus to implement transmission and reception of data to and from a communication terminal, said electronic worth charging method comprising:
an electronic value receiving step of receiving an electronic value from the communication terminal;
an electronic worth charging step of charging said electronic value received in the electronic value receiving step, with an electronic worth; and
an electronic value transmitting step of transmitting the electronic value charged with the electronic worth in the electronic worth charging step, to the communication terminal.

8. A communication terminal comprising:
electronic value storing means for storing an electronic value containing identification information of an issuer;
issuer identification information receiving means for receiving identification information of the issuer of the electronic value from a server apparatus;
issuer authenticating means for performing an authentication process of authenticating the issuer of the electronic value, on the basis of the identification information of the issuer in the electronic value stored in the electronic value storing means and the identification information of the issuer received from the server apparatus by the issuer identification information receiving means; and
electronic worth charging means for charging the electronic value with an electronic worth when receiving charge information which is transmitted from the server apparatus if the issuer authenticating means authenticates the issuer of the electronic value and if the validity of a user of the communication terminal is authenticated.

9. A server apparatus comprising:
user authenticating means for, on the basis of user information transmitted from the communication terminal as set forth in Claim 8, performing an authentication process of authenticating the user of the communication terminal; and
charge information transmitting means for transmitting charge information for charging the electronic value with an electronic worth, to the communication terminal when the authentication process for the user of the communication terminal is successfully completed by the user authenticating means.

10. The server apparatus according to Claim 9 further comprising settlement confirming means for performing a settlement confirmation process of confirming settlement about the user and the electronic value of the communication terminal,
wherein when the user authentication process by the user authenticating means and the settlement confirmation process by the settlement confirming means are successfully completed, the charge information transmitting means transmits the charge information to the communication terminal.

11. The server apparatus according to Claim 9, wherein said electronic value is an electronic book coupon.

12. The server apparatus according to Claim 9, wherein said electronic value is an electronic coupon ticket.

13. An electronic worth charging method for a communication terminal to implement transmission and reception of data to and from a server apparatus, said electronic worth charging method comprising:
an electronic value storing step of storing an electronic value containing identification information of an issuer, in storing means;
an issuer identification information receiving step of receiving identification information of the issuer of the electronic value from the server apparatus;
an issuer authenticating step of performing an authentication process of authenticating the issuer of the electronic value, on the basis of the identification information of the issuer in the electronic value stored in the storing means and the identification information of the issuer received from the server apparatus in the issuer identification information receiving step; and
an electronic worth charging step of charging the electronic value with an electronic worth when receiving charge information which is transmitted from the server apparatus if the issuer of the electronic value is authenticated in the issuer authenticating step and if the validity of a user of the communication terminal is authenticated.

14. An electronic worth charging method for a server apparatus to implement transmission and reception of data to and from.a communication terminal, said electronic worth charging method comprising:
a user authenticating step of performing an authentication process of authenticating a user of the communication terminal, on the basis of user information transmitted from the communication terminal as set forth in Claim 8; and
a charge information transmitting step of transmitting charge information for charging the electronic value with an electronic worth, to the communication terminal when the authentication process for the user of the communication terminal is successfully completed in the user authenticating step.

15. An electronic worth charging program for letting a communication terminal configured to implement transmission and reception of data to and from a server apparatus, execute the following processes:
an electronic value storing process of storing an electronic value which can be charged with no electronic worth by the communication terminal, in storing means;
an electronic value transmitting process of transmitting the electronic value stored in the storing means by the electronic value storing process, to the server apparatus; and
an electronic value receivingprocess of receiving from the server apparatus the electronic value which was charged with an electronic worth by the server apparatus.
